# EUROPEAN PATENT SPECIFICATION

(11) **EP 1 348 675 B1**
(45) Date of publication and mention of the grant of the patent: **02.03.2005**
(21) Application number: 02028277.8
(22) Date of filing: 17.12.2002
(51) Int. Cl.: C03C 17/34, G02F 1/153, G02F 1/157, B01J 35/00, B32B 17/10, G02B 1/10

(54) **Substrate coated with a laminated photocatalytic film**
Mit einem laminierten photokatalytischen Film beschichtetes Substrat
Substrat revêtu d'un film photocatalytique laminé

(30) Priority: 27.03.2002 JP 2002088062
(43) Date of publication of application: 01.10.2003
(73) Proprietor: Murakami Corporation, Shizuoka-shi, Shizuoka (JP)
(72) Inventor: Muto, Tadashi, Murakami Corporation Fujieda Works, Fujieda-shi, Shizuoka (JP); Kikuchi, Hideyuki, Murakami Corporation Fujieda, Fujieda-shi, Shizuoka (JP); Kobayashi, Masaki, Murakami Corporation Fujieda, Fujieda-shi, Shizuoka (JP); Komatsu, Toru, Murakami Corporation Fujieda Works, Fujieda-shi, Shizuoka (JP)
(74) Representative: Dallmeyer, Georg, Dipl.-Ing.

(56) References cited:
- EP-A- 1 003 067
- WO-A-01/87593
- PATENT ABSTRACTS OF JAPAN vol. 2002, no. 10, 10 October 2002 (2002-10-10) & JP 2002 159863 A (HITACHI LTD), 4 June 2002 (2002-06-04)

## Description

### FIELD OF THE INVENTION

The present invention relates to a composite material which is adapted to produce a photocatalytic coating onto a base material surface, wherein a decomposition/removal action of dirt which is adhered to the surface thereof is carried out, a photocatalytic effect such as hydrophilicity is caused to be generated, and a surface reflection or an interference color is suppressed.

### BACKGROUND OF THE INVENTION

A technology, in which a photocatalytic coating is produced onto a base material surface, decomposition/removal of dirt adhering to the surface thereof etc. is carried out, and this surface is made to be hydrophilic has been conventionally known. For example, a technology, wherein photocatalyst coating is produced onto a base material surface and decomposition removal of dirt adhering to the surface thereof is carried out, is disclosed in JP-A-63-100042. A technology of forming a photocatalyst film on a base material surface, forming a porous inorganic oxide film as the outermost surface film thereon, making the surface of the porous inorganic oxide film hydrophilic, and also carrying out decomposition/removal of the dirt adhering to the surface of the porous inorganic oxide film on a photocatalyst film of a lower film so as to maintain the hydrophilicity of the porous inorganic oxide film of the outermost surface film, is disclosed in JP-A-10-36144, and JP-A-2000-53449. A technology of forming a photocatalyst film on a base material surface, making the base material surface hydrophilic by use of a hydrophilicity of photocatalyst itself, is disclosed in WO96 29375 International Publication. A technology of forming a photocatalyst film on the surface of EC (electrochromic) element, forming a porous inorganic oxide film as the outermost surface thereon and acquiring hydrophilicity in a porous inorganic oxide film of the outermost surface, wherein along with this, decomposition removal of the dirt adhering to the surface of the porous inorganic oxide film is carried out on a photocatalyst film of a lower film so as to maintain a hydrophilicity of the porous inorganic oxide film of the outermost surface, and further ultraviolet rays are intercepted on a photocatalyst film so as to obviate a degradation of EC substance, is disclosed in JP-A-2000-155344.

In order to have a photocatalytic effect (a decomposition effect of an accretion and a hydrophilic effect), about 100nm thickness of a photocatalyst film is required. However, if there is about 100nm thickness of a photocatalyst film, when photocatalyst material with high refractive index, such as TiO₂, is used, reflection on the photocatalyst film is large, and an interference color arises strongly. For this reason, when it is applied to mirrors such as an exterior mirror for automobiles, double image might be produced or an obstructive interference color might be produced. Especially in EC elements, this interference color overlaps with coloring of the EC elements itself, and might produce a strange color tone.

This invention is intended to overcome the aforementioned problems in the related arts, and provide composite materials which control surface reflection or an interference color, securing the photocatalytic effect simultaneously.

### SUMMARY OF THE INVENTION

According to this invention, a composite material having a laminated film in which between two or more photocatalyst layers each possessing a light permeability and a photocatalytic reactivity, middle layers composed of a light permeable material having a reflectance different from that of the photocatalyst layers are interposed, provided on the surface of a substrate. According to this structure, since a photocatalytic effect added to the photocatalytic effect by each photocatalyst film is obtained, even if each photocatalyst film is thin, a strong photocatalytic effect can be produced. What is more, since each photocatalyst film can be made thin, surface reflection and an interference color can be stopped. Pluralities of photocatalyst films can comprise, for example, the same photocatalyst material. When the middle layers comprise pluralities of layers, these pluralities of middle layers can comprise the same material. The middle layers can comprise a material with a refractive index lower than for example a photocatalyst film. Incidentally, this invention also allows an arrangement of a proper functional film disposed on an uppermost layer of the photocatalyst film, or between the lowermost layer of photocatalyst film and the base material surface, as needed.

In this invention, thickness of each photocatalyst film can be set to, for example, 50nm or less (preferably 30nm or less), whereby a surface reflection and an interference color can be suppressed effectively. Also, thickness of this respective photocatalyst film can be set to, for example, 5nm or more (preferably 10nm or more), whereby a sufficient photocatalytic effect can be obtained, controlling the increase of the number of films of a photocatalyst film simultaneously. Moreover, the thickness of a single film or multiple middle layers can be set to, for example, 50nm or less (more preferably 30nm or less), whereby, the photocatalytic effect of each photocatalyst film can be added and obtained easily on the outermost surface of a laminated film, and the surface reflection and the interference color by the middle layer itself can be controlled effectively. Also, thickness of the single or multiple middle layers, for example, can be set to as 5nm or more (preferably 10nm or more); whereby an effect (a surface reflective control effect, an interference color control effect) of dividing photocatalyst films into pluralities of films becomes easy to be obtained. The photocatalyst films can be composed of such a material as TiO₂, SrTiO₃, and WO₃. Moreover, the aforementioned middle layer can be composed of an inorganic oxide such as SiO₂, WO₃, Al₂O₃, and ITO, and other oxides. The middle layer can also be composed of another photocatalyst material with a different refractive index from the aforementioned photocatalyst films.

According to this invention, the laminated film has a hydrophilic film having an optical permeability structured with different materials from the photocatalyst film of said uppermost layer (e.g., that having a refractive index lower than the photocatalyst film of the uppermost layer) provided on said photocatalyst film, and said hydrophilic film constitutes the outermost surface of the laminated film so as to be exposed to an open air. According to this structure, the surface can be made into hydrophilicity (or have an increased hydrophilicity). Alternatively, a photocatalyst film which constitutes an uppermost surface of said multiple layers may constitute the outermost surface of said laminated film so as to be exposed to an open air. According to this structure, the decomposition effect of the accretion by the photocatalyst film is obtained, and also the hydrophilic effect by the photocatalyst film itself is expectable. Thickness of the hydrophilic film can be set to, for example, 50 nm or less (more preferably 30 nm or less) as similar to the middle layer. According to this structure, the photocatalytic effect of each photocatalyst film becomes easy to be added on the outermost surface of laminated film, and also the surface reflection and the interference color by this hydrophilic film itself can be suppressed effectively. Moreover, thickness of the hydrophilic film can be set to 5nm or more (more preferably 10 nm or more). Consequently, abrasion resistance of the hydrophilic film can be made good.

According to this invention, the outermost surface (exposure side to an open air) of the laminated film can be formed in a state of porosity. This makes it possible to make the surface into hydrophilicity (or to be the surface having an increased hydrophilicity).

In this invention, the aforementioned base material can be constituted, e.g., by a transparent substrate. By employment of this transparent substrate, it can be adapted for a wide range of uses such as the windowpanes for vehicles and construction, etc., the lens for glasses, the lens for cameras, and a filter for cameras, etc. In this case, the aforementioned laminated film can be formed on one side or both sides of a transparent substrate. Also, if the aforementioned laminated film is formed on one side of the transparent substrate and a reflective film is formed on the backside of this transparent substrate, the mirror main part of the exterior mirror for automobiles and other mirrors can be obtained.

In this invention an EC element can be constituted by carrying out opposing arrangement of the second substrate on the backside of the transparent substrate, or by putting a substance which exhibits an electrochromic phenomenon between these substrates. By employment of this structure, since the thickness of each photocatalyst film required to produce a photocatalytic effect is thin, surface reflection and an interference color can be stopped. Accordingly, original color tone of EC elements is obtained. If the aforementioned second substrate is structured with a transparent substrate and a reflective film is formed in the external surface side of this second substrate, EC mirror can be constituted. EC mirror can be used as a mirror main part of EC exterior mirror for automobiles, for example.

### BRIEF DESCRIPTION OF THE DRAWINGS

Fig.1 is a cross-sectional view showing the exemplary embodiment of this invention.
Fig.2 is a cross-sectional view schematically showing a conventional structure of two-layer laminated film.
Fig.3 is a view showing spectral reflectance characteristics measured about a sample having a structure of Fig.1.
Fig.4 is a view showing spectral reflectance characteristics measured about a sample having a structure of Fig.2.
Fig.5 is a cross-sectional view schematically showing an exemplary embodiment of a mirror using a structure of Fig.1.
Fig.6 is a cross-sectional view schematically showing an exemplary embodiment of a mirror main part of EC exterior mirror for automobiles using a structure of Fig.1.
Fig.7 is a cross-sectional view schematically showing a mirror main part of EC exterior mirror for automobiles having no laminated film on the surface of a glass substrate.
Fig.8 is a cross-sectional view schematically showing a mirror main part of EC exterior mirror for automobiles having two-layer laminated film on the surface of a glass substrate.
Fig.9 is a view showing spectral reflectance characteristics, respectively measured about samples of Fig.7 and Fig.8 in anti-glare state.
Fig.10 is a view showing spectral reflectance characteristics, respectively measured about samples of Fig.6 and Fig.7 in anti-glare state.
Fig.11 is a cross-sectional view schematically showing other embodiment of a mirror main part of EC exterior mirror for automobiles using a structure of Fig.1.
Fig.12 is a cross-sectional view schematically showing other embodiment of a mirror main part of EC exterior mirror for automobiles using a structure of Fig.1.
Fig.13 is a cross-sectional view schematically showing other embodiment of a mirror main part of EC exterior mirror using a structure of Fig.1.
Fig.14 is a cross-sectional view schematically showing other embodiment of a mirror main part of EC exterior mirror for automobiles using a structure of Fig.1.
Fig.15 is a cross-sectional view schematically showing EC elements structured transparently in whole part using a structure of Fig.1.
Fig.16 is a cross-sectional view schematically showing other embodiment of EC elements structured transparently in whole part using a structure of Fig.1.
Fig.17 is a cross-sectional view schematically showing other embodiment of EC elements structured transparently in whole part using a structure of Fig.1.
Fig.18 is a cross-sectional view schematically showing other embodiment of EC elements structured transparently in whole part using a structure of Fig.1.

### PREFERRED EMBODIMENTS OF THE INVENTION

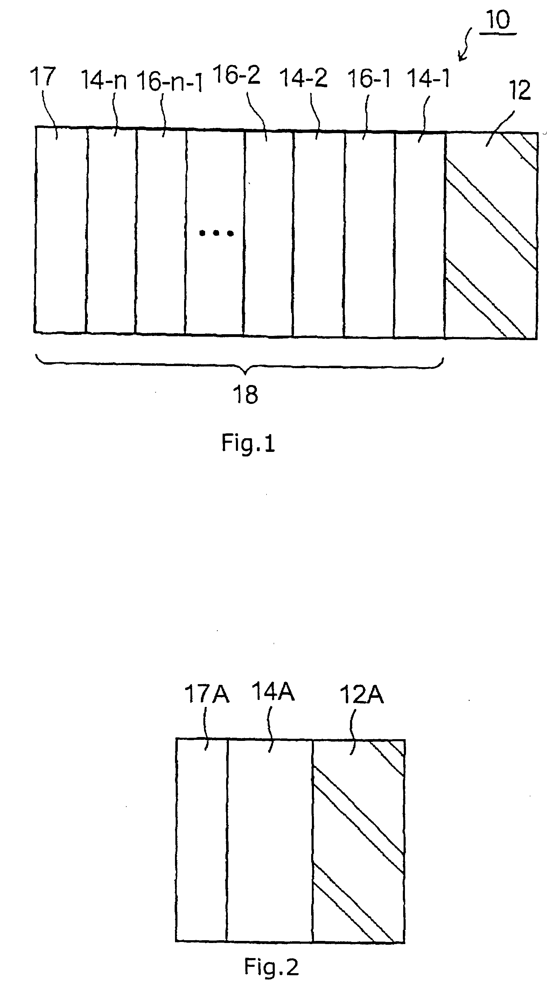

Embodiments of this invention will be shown in cross-sectional view in Fig.1. Composite material 10 comprises a laminated film 18, which is laminated on one side of transparent substrate (transparent base material) 12 structured with glass or a synthetic resin, such as acrylic resin. The laminated film 18 is formed in such a manner that photocatalyst films 14 (14-1, 14-2, --, 14-n) each comprising a photocatalyst material with a light permeability property, and middle layers 16 (16-1, 16-2, --, 16-n-1) structured with a material with a light permeability property, having a different refractive index from the photocatalyst films (for example, a refractive index is lower than this photocatalyst material), are laminated alternately. Further, hydrophilic film 17 having a light permeability property, comprises a different material from photocatalyst film 14-n of this uppermost film (for example, the same material as the middle layer 16) is laminated on the photocatalyst film 14-n of the uppermost film so as to present a transparent whole constitution. The hydrophilic film 17 which constitutes the outermost surface (exposure side to an open air) of the laminated film 18 is constituted in a state of porosity having fine unevenness formed on the surface thereof. As for the middle layers 16-1, 16-2, --, and 16-n-1, either in porous state or in non-porous state, the photocatalytic effect added to each photocatalyst film 14 is obtained on the outermost surface of the laminated film 18. Using a PVD method such as vacuum vapor deposition and sputtering, or any other film formation method, the laminated film 18 is formed by laminating each film one by one on the transparent substrate 12. As for hydrophilic film 17, by setting film formation conditions of a PVD method such as vacuum vapor deposition or sputtering, in porous state, film formation in porous state with fine unevenness formed on the surface was achieved in a similar manner to a method disclosed in JP-A-10-36144 and JP-A-2000-53449.

As a photocatalyst material of the photocatalyst films 14, TiO₂, SrTiO₃, and WO₃ etc. can be used, for example. As a material of middle layers 16, inorganic oxides such as SiO₂, WO₃, Al₂O₃, and ITO, etc. can be used, for example. As a material of the porous hydrophilic film 17, the same material as the middle layers 16 can be used, for example, inorganic oxides, such as SiO₂, WO₃, Al₂O₃, and ITO, etc. can be used. Referring to the film thickness of each photocatalyst film 14 respectively, since surface reflection becomes high and an interference color arises again if too thick, 50nm or less (preferably 30nm or less) is suitable. Also, if film thickness of each photocatalyst film 14 is too thin, since its number of films required to obtain sufficient photocatalytic effect will increase, 5nm or more (preferably 10nm or more) is suitable. Also, if the film thickness of each middle layer 16 is too thick, the photocatalytic effect added to each photocatalyst film 14 is hard to be obtained on the outermost surface of the laminated film. Moreover, since the surface reflection by the middle layer itself becomes high and an interference color arises again, 50 nm or less (preferably 30nm or less) are suitable respectively. Moreover, if thickness of each middle layer 16 is too thin, since the effect (the surface reflective control effect, the interference color control effect) of dividing a photocatalyst films into plurality of films is hard to be obtained, 5nm or more (preferably 10nm or more) is suitable. Moreover, referring to the thickness of hydrophilic film 17, if too thin, since abrasion resistance falls, 5nm or more (preferably 10nm or more) is suitable. Referring to the number of the laminated film 18, since the number of films is increased the number of processes is increased correspondingly, incurring a high manufacture cost and coloration by the color of the film itself, films of about eighteen or less are suitable. About 400nm or less is suitable for the thickness of the whole laminated film 18.

An example of a setting of the thickness and the number of laminated in the case where photocatalyst film 14 is composed of TiO₂, and middle layers 16 and the porous hydrophilic film 17 are composed of SiO₂ is shown in Table 1. Incidentally, in Table 1 the number of laminating "the middle layers and a hydrophilic film" shows a total number of these both films.

**Table 1**

| | Photocatalyst Layer (TiO₂) | | Middle Layer and Hydrophilic Layer (SiO₂) | |
|---|---|---|---|---|
| | Thickness | No of Lamination | Thickness | No of Lamination |
| Set Example 1 | 10 nm | 9 | 10 nm | 9 |
| Set Example 2 | 10 nm | 8 | 10 nm | 8 |
| Set Example 3 | 10 nm | 7 | 10 nm | 7 |
| Set Example 4 | 15 nm | 6 | 10 nm | 6 |
| Set Example 5 | 20 nm | 5 | 10 nm | 5 |
| Set Example 6 | 20 nm | 4 | 10 nm | 4 |

Referring to composite material 10 as shown in Fig.1, transparent substrate 12 is composed of glass substrate, and the surface thereof is laminated by eight layers of TiO₂ for every 10nm thickness as photocatalyst films 14, and eight layers of SiO₂ with lower refractive index than TiO₂ for every 10nm as middle layers 16 or porous hydrophilic film 17, were laminated alternately. A sample structured transparently in whole part was thus fabricated, and similarly characteristics were measured. A measurement result will be shown below.

### (1) Spectral reflectance characteristics:

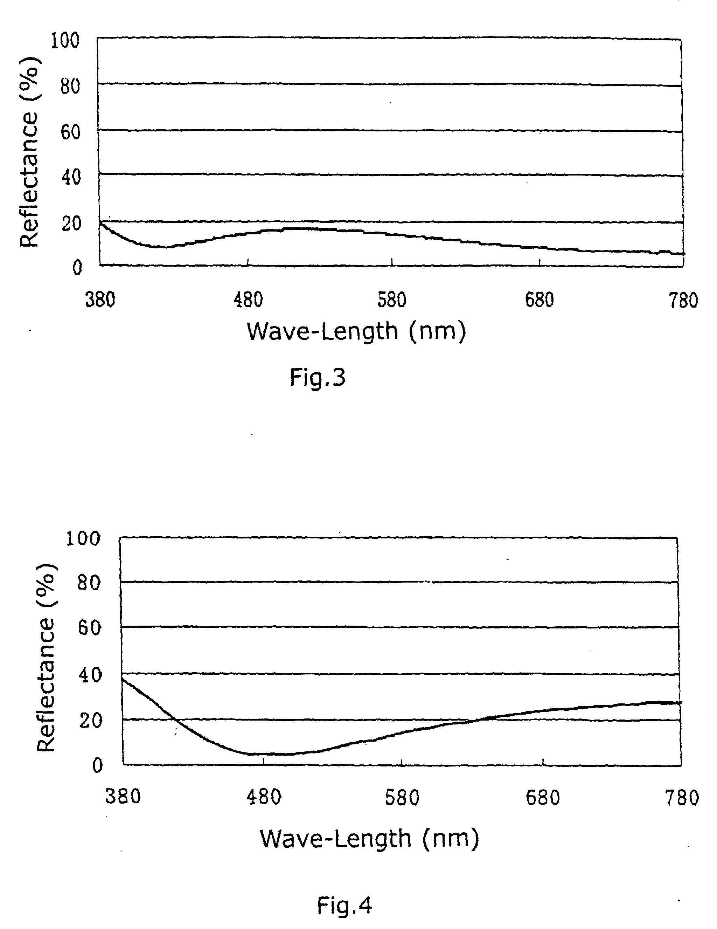

Spectral reflectance characteristics measured concerning a sample of this invention will be shown in Fig.3. Similarly, the spectral reflectance characteristics measured concerning the conventionally structured sample (Photocatalyst film 14A:100nm thickness, porous hydrophilic film 17A:10nm thickness) will be shown in Fig.4. When Fig.3 and Fig.4 are contrasted, it is elucidated that according to the sample of this invention, reflectance is low in a whole visible region compared with a conventionally structured sample, the spectral characteristic is flat and an interference color is stopped.

### (2) Photocatalyst characteristic:

Referring to a sample of conventional constitution, Table 2 shows a time-lapse change of a water-drip contact angle (hydrophilic ability) at the time of setting thickness of porous hydrophilic film 17A as about 10nm, and setting thickness of TiO₂ film 14A variously. "initial water-drip contact angle" is a value immediately after manufacture, " "six months after water-drip contact angle" is a value obtained after cleaning and waxing a car continuously for six months.

**Table 2**

| Thickness of TiO₂ | Water-drip Contact Angle | |
|---|---|---|
| Layer | Initial | After 6 months |
| 75 nm | Not more than 5 | 30-40 |
| 100 nm | Ditto | Not more than 20 |
| 150 nm | Ditto | Not more than 10 |
| 200 nm | Ditto | Ditto |
| 300 nm | Ditto | Ditto |

According to Table 2, it is elucidated that about 100nm or more of thickness of TiO₂ film 14A is required in conventionally structured sample, in order to obtain a photocatalyst performance to maintain a water-drip contact angle of 20 degrees or less. On the other hand, when a time-lapse change of a water-drip contact angle was similarly measured about the sample of this invention, an initial water-drip contact angle became 5 degrees or less, and water-drip contact angle became 20 degrees or less six months later. Photocatalyst performance equivalent to the sample of the conventional structure wherein thickness of TiO₂ film 14A is 100 nm was thus obtained.

### (3) Abrasion resistance

Referring to the sample of this invention, when the friction test instrument rolled by cloth is made to reciprocate 10,000 times by the load of 1 N/cm² on the sample surface and appearance evaluation was carried out, there was nothing with a crack and sufficient abrasion resistance was obtained.

The above results are the results of the measurement for the sample of the setting example 2 of Table 1. However, referring to the sample of other setting examples 1, 3 to 6, spectral reflectance characteristics was obtained, which was low in the whole visible region compared with conventionally structured spectral reflectance characteristics (Fig.4) of Fig.2, the spectral characteristic was flat and also an interference color was suppressed. Moreover, referring to photocatalyst characteristic and abrasion resistance also, sufficient characteristic was obtained.

Composite material 10 of the structure as shown in Fig.1 can be used as the windowpanes for example, for a vehicle, for construction, and the like; the lens for a glass, the lens for a camera; and a filter for a camera, etc. (laminated film 18 is arranged turning outside). In any case, hydrophilicity and stain-resistance are obtained. Moreover, since surface reflection and an interference color are suppressed, in case of the lens for glasses, a reflective color and a permeation color are not worrisome. Also, in the case of a lens for cameras, and a filter for cameras, the permeation color is suppressed. Whereby, an image cannot be affected easily. In addition, in the case of the windowpanes for vehicles and for construction, etc., the lens for glasses, etc., the laminated films 18 can also be formed in both sides of transparent substrate 12 as needed.

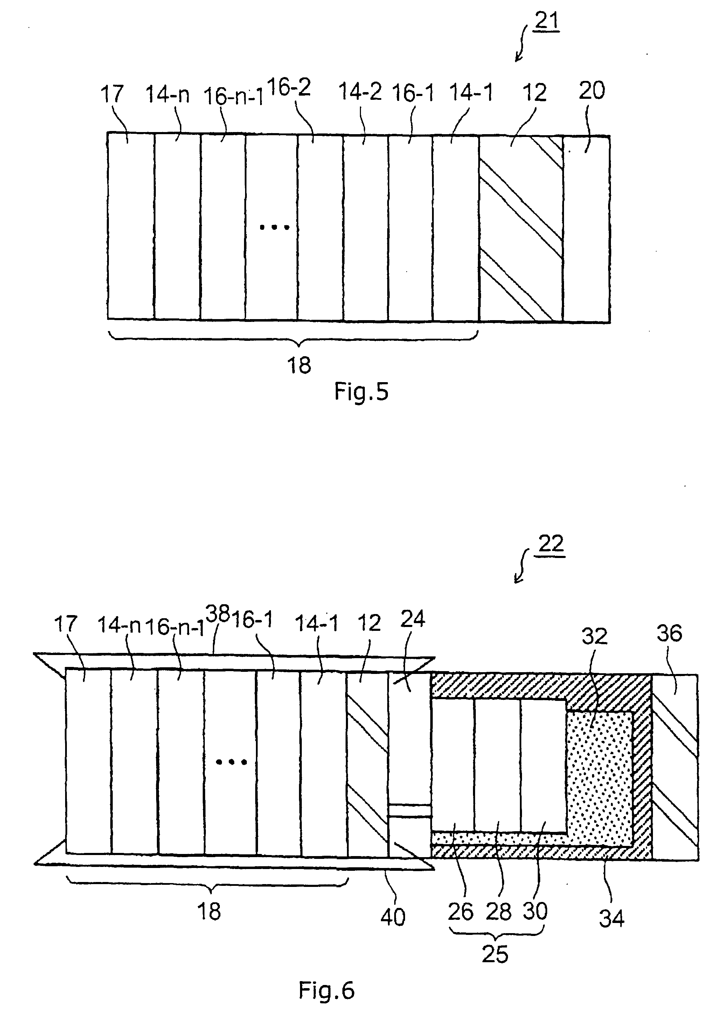

Also, if a reflective film 20 composed of such a material as Cr or Al, is formed on the backside of transparent substrate 12 using the structure of Fig.1 as shown in Fig.5, mirror 21 is constituted. A mirror thus obtained can be adapted to, for example, an exterior mirror for a vehicle or a mirror for a bathroom as mirror main parts. In any case, hydrophilicity and stain-resistance are obtained. Moreover, since surface reflectance is low, a double image is prevented. An interference color is also suppressed. In addition, an outermost surface (open air exposure side) of laminated film 18 is composed of porous hydrophilic film 17 in structure as shown in Fig.1 and Fig.5. However, photocatalyst film 14-n can also be arranged on the outermost surface without constituting the porous hydrophilic film 17. Moreover, the photocatalyst film 14-1 is formed as a first film on the surface of the transparent substrate (transparent base material) 12. However, another film can also be arranged between the transparent substrate (transparent base material) 12 and the photocatalyst film 14-1. Also, in each photocatalyst film 14-1, 14-2, --, 14-n, all films do not necessarily need to be composed of same photocatalyst materials. Photocatalyst films of different materials may be intermingled. Moreover, the porous hydrophilic film 17 and the middle layers 16 do not necessarily need to be composed of same materials, but may be composed of different materials. For example, the porous hydrophilic film 17 can be structured with porous SiO₂, and the middle layers 16 can also be composed of materials other than SiO₂ (for example, WO₃, Al₂O₃, ITO, etc.). Moreover, each middle layer 16-1, 16-2, --, 16-n-1, does not necessarily need to be composed of the same material, and middle layers of different materials may be intermingled.

Moreover, an outermost surface of laminated film 18 can be replaced with a non-hydrophilicity material such as ITO, instead of hydrophilic film 17. An uppermost surface of the laminated film 18 may be composed of a non-hydrophilic material such as ITO, instead of hydrophilic film 17. Even if it is non-hydrophilicity material, by arranging a low refractive-index film on the outermost surface, the surface reflectance reduction effect is gained compared with the case wherein a photocatalyst film is arranged on the outermost surface.

Also, in a structure of Fig.1 and Fig.5, photocatalyst film 14 is made into three or more (That is, n value is 3 or more) layers, however it may also be composed of two layers (middle layer 16 arranged between the photocatalyst films 14 is one layer).

In this case, if each thickness of photocatalyst film 14 to 1 is set as about 50nm, a sufficient photocatalytic effect can be gained, and along with this, spectral characteristic becomes flat and an interference color is suppressed compared with a photocatalyst film which comprises a single layer with 100nm thickness. Also, in a structure of Fig.1, the laminated film is formed only on one side of the transparent substrate 12, however, the film can also be formed on both sides. Moreover, in the structure shown in Fig.1, a transparent substrate (transparent base material) is used to make up the substrate (base material) 12, but an opaque material such as the surface of a wall of a building can also be used as the base material. In this case, also surface reflection and an interference color can be suppressed.

Embodiment of the mirror main part of EC exterior mirror for a vehicle (anti-glare mirror) using the composite material of this invention will be shown in Fig.6. Portions of the same designation as those in Fig. 1 are designated the same numerals and signs. Laminated film is formed on one side of transparent substrate 12 wherein mirror main part 22 of this EC exterior mirror is structured with glass. Laminated film 18 is formed by alternatively laminating photocatalyst TiO₂ films 14 (14-1, 14-2, --, 14-n) and SiO₂ films 16 (16-1, 16-2, --, 16-n-1) SiO₂ which are composed of SiO₂ with a refractive index lower than a photocatalyst TiO₂ film, and further laminating porous SiO₂ film 17 is laminated on outermost photocatalyst TiO₂ film 14-n. The whole part of the resulting laminated film 18 is transparent. On the backside of glass substrate 12, transparent electrode film 24 such as ITO, EC films 25 (oxidation coloring film 26, such as IrOx, solid electrolyte film 28 such as Ta₂O₅, and laminates of reduction coloring film 30 such as WO₃), and an electrode-cum-reflective film 32 such as Al and Cr, are formed one by one. These laminated films 24, 25, and 32 are sealed with sealing agent 34 such as epoxy and another glass substrates (sealing glass) 36. Both edges in the vertical direction of a glass substrate 12 are equipped with clip electrodes 38 and 40. The clip electrode 38 is electrically connected to the transparent electrode film 24, and the clip electrode 40 is electrically connected to electrode-cum-reflective film 32. By the application of coloring voltage between the clip electrode 38 and 40, the EC films 25 are colored (anti-glare state) and the EC films 25 are decolorized by the application of decolorization voltage (non-anti-glare state).

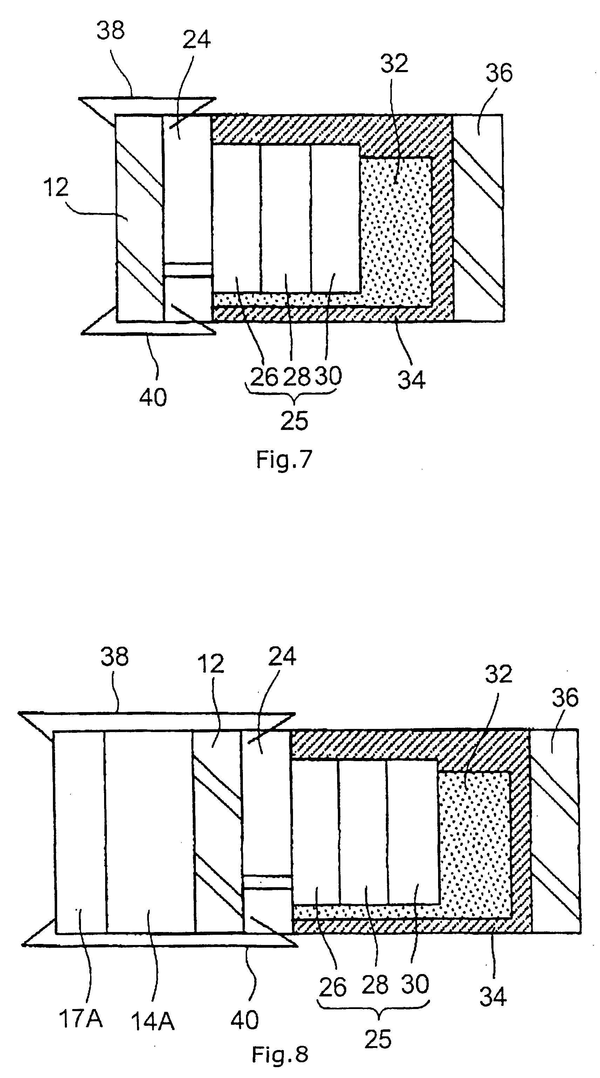

As for a mirror main part 22 of EC exterior mirror of Fig.6, eight layers of photocatalyst TiO₂ layer 14 for every 10nm thickness, and eight layers of SiO₂ film 16 and porous SiO2 film 17 for every 10 nm were laminated alternately, a sample using Al as an electrode-cum-reflective film 32 was produced, and the reflectance was measured. For comparison, the sample which does not have a laminated film on the surface of glass substrate 12 shown in Fig. 7, and the sample which has the two-layer laminated film having a photocatalyst TiO₂ 14A with 180 nm thickness and porous SiO₂ 17A with 20 nm thickness laminated on the surface of the glass substrate 12 as shown in Fig.8 were prepared, and the reflectance was measured similarly. A measurement results will be shown below.

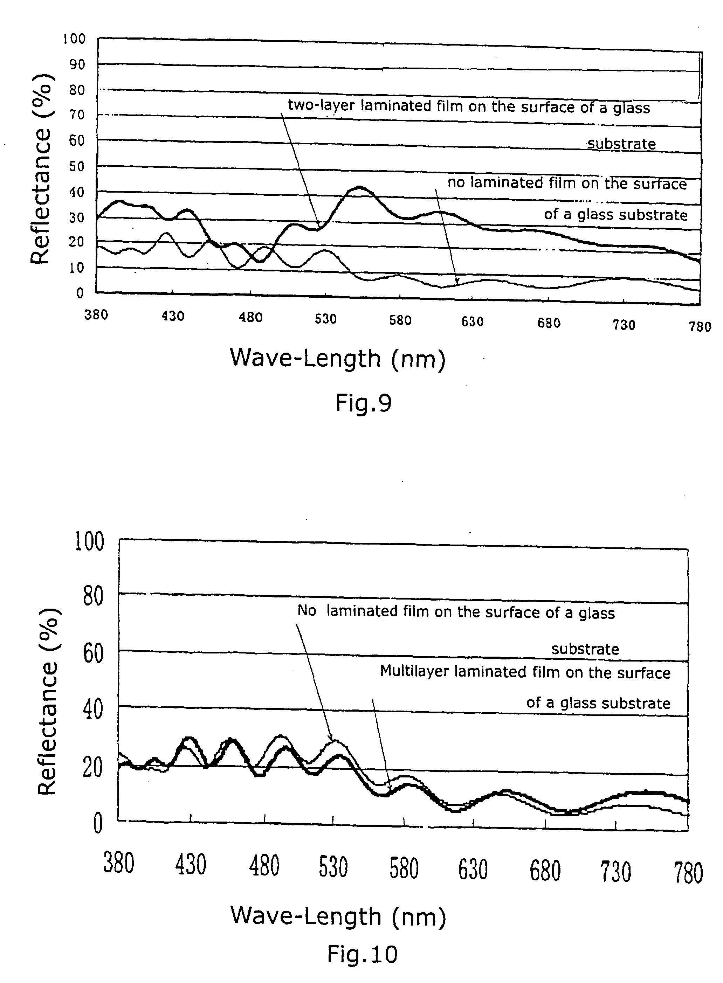

Thick line in Fig.9 indicates reflective characteristic of a sample having two-layer laminated film of Fig.8 under anti-glare situation, whereas thin line in Fig.9 indicates spectral reflectance characteristics measured about a sample having no laminated film of Fig.7 under the anti-glare situation. The sample using the two-layer laminated film shows the characteristic (thick line in Fig.9) that the optical interference color appeared strongly and overlapped with coloring of EC elements, and exhibits a strange color tone different from the characteristic (thin line in Fig.9) of the EC elements themselves. Both characteristics are thus compared in order to be clearly elucidated.

Table 3 shows a reflectance of a sample with no laminated film of Fig.7 and that of a sample of Fig.8 with two layer laminated film measured in anti-glare state and non-anti-glare state.

**Table 3**

| | Reflectance | |
|---|---|---|
| Sample | Anti-glare | Non-Anti-glare |
| Fig. 7: No laminated Film | 10% | 60% |
| Fig. 8: Two Layer Laminated Film | 31% | 65% |

It can be understood from Table 3 that reflectance of the sample having two layer laminated film has an increased reflectance and a lowered anti-glare function in the anti-glare state as compared with the sample having no laminated film.

Thick line of Fig.10 shows spectral reflectance characteristics of a sample of this invention shown in Fig. 6 measured in anti-glare state. Thin line of Fig.10 shows spectral reflectance characteristics of a sample with no laminated film shown in Fig.7 measured in anti-glare state. Comparison of the both characteristics shows a characteristic of a state in this invention where optical interference is suppressed and color tone which is close to a characteristic of EC elements per se (Fig. 10 thin line) is obtained.

Table 4 shows a reflectance of a sample with no laminated film of Fig.7 and that of a sample of this invention of Fig.6 measured in anti-glare state and non-anti-glare state.

**Table 4**

| | Reflectance | |
|---|---|---|
| Sample | Anti-glare | Non-Anti-glare |
| Fig. 7: No laminated Film | 10% | 60% |
| Fig. 6: Multilayer Laminated Film | 11% | 61% |

According to Fig.4, it is elucidated that a sample of this invention is not inferior compared with a sample having no laminated film of Fig.7 in reflective characteristic. (sufficient anti-glare function is obtained)

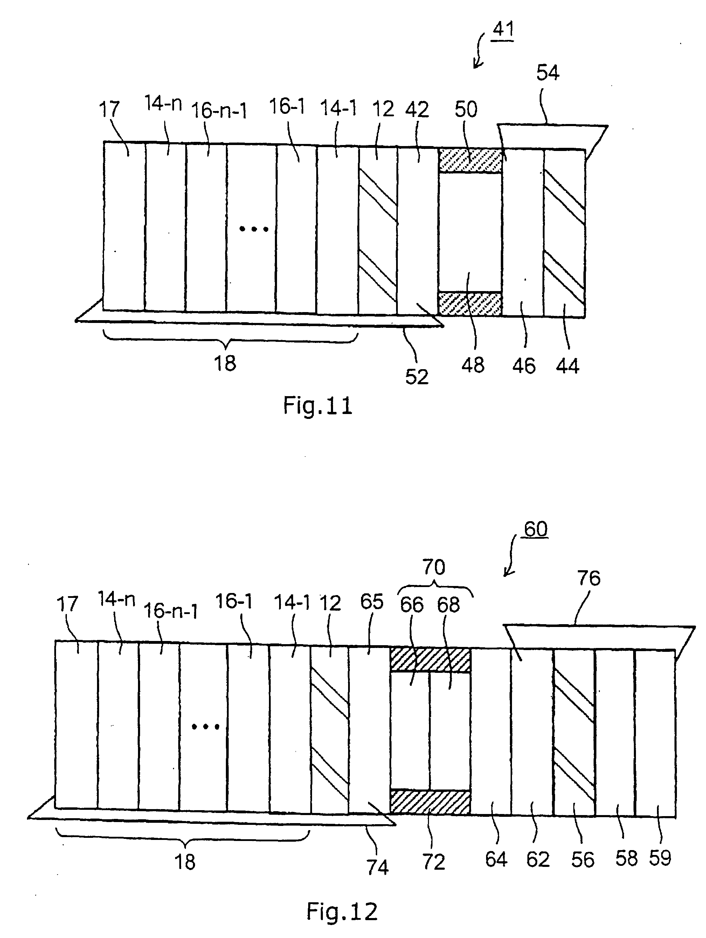

Other embodiment of the mirror main part of EC exterior mirror for a vehicle using the composite material of this invention will be shown in Fig.11. Portions of the same designation as those used in Fig.1 are designated the same numerals and signs. As for mirror main part 41 of this EC exterior mirror, transparent electrode film 42 such as ITO, is formed on the backside surface of transparent glass substrate 12. Electrode-cum-reflective film 46 such as Al or Cr, is formed on inner peripheral side of substrate 44 (which may be opaque) such as glass arranged in an opposing manner with transparent glass substrate 12. Between the transparent glass substrate 12 and the substrate 44, EC solution which constitutes the EC film 48 (for example, EC substances such as viologen, solvents such as solvents γ-butyrolactone, and propylene carbonate, a mixed solution of ultraviolet-rays absorbents such as benzophenone, and a cyanoacrylate) is incorporated. The EC film 48 is sealed with sealing agent 50. Lower edge of the transparent glass substrate 12 is equipped with clip electrode 52, which is electrically connected to transparent electrode film 42. An upper edge of the substrate 44 is equipped with the clip electrode 54, which is electrically connected to an electrode-cum-reflective 46. By the application of coloring voltage between the clip electrode 52 and 54, EC film 48 is colored (anti-glare state), and the EC film 48 is decolorized by the application of decolorization voltage (non-anti-glare state).

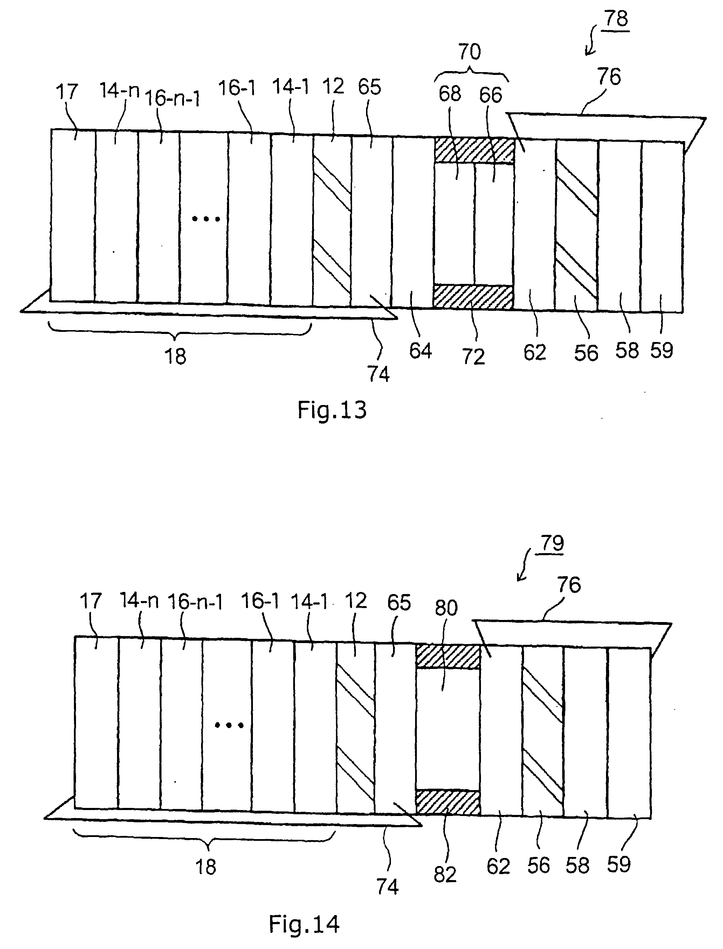

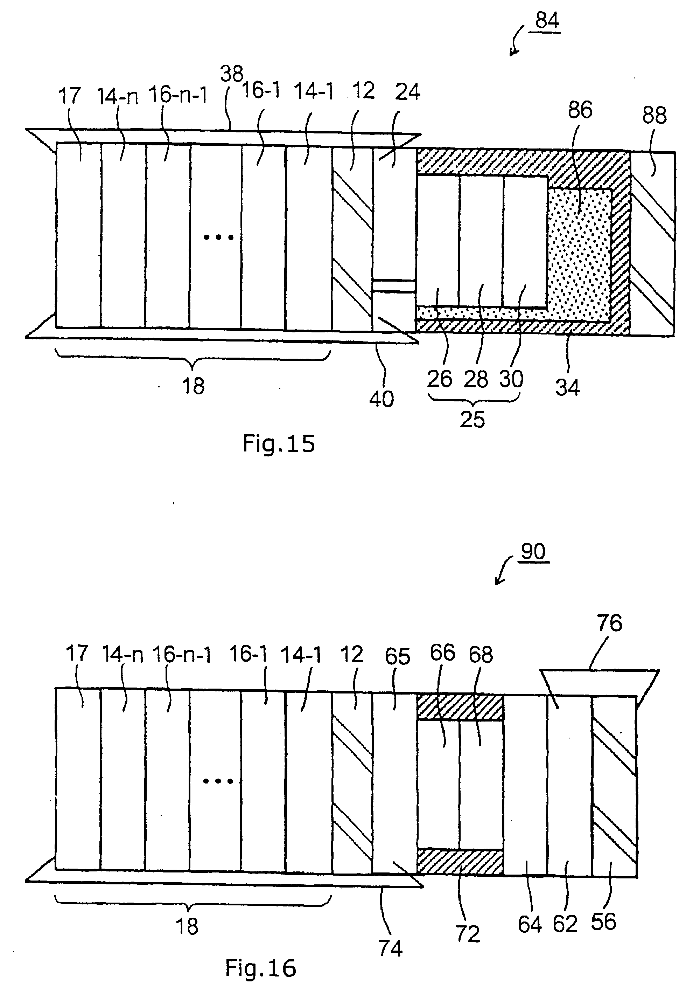

Furthermore, another embodiments of the mirror main part of EC exterior mirror for a vehicle using composite material of this invention are shown in Fig.12 to Fig.14, respectively. Portions of the same designation as those in Fig.1 are designated the same numerals and signs. These mirror main parts of EC exterior mirror for a vehicle are composed of reflective films 58 such as Al and Cr formed at the backside surface of the transparent glass substrate 56. Protection coat 59 is coated on the backside surface of the reflective film 58. As for mirror main part 60 of EC exterior mirror of Fig.12, transparent electrode film 62 and electrode protection film 64 such as SiO₂ are formed in front of transparent glass substrate 56, transparent electrode film 65 and EC substance film 66 such as WO_{3,} MoO₃, and IrOx are formed on the backside surface of the transparent glass substrate 12, and between both substrates 12 and 56, an electrolyte solution 68 (for example, an electrolyte such as LiI and LiClO₄, solvents such as γ-butyrolactone, and propylene carbonate, and a mixed solution of ultraviolet absorber such as benzophenone and cyanoacrylate) is incroporated. EC film 70 (EC substance film 66 and electrolyte solution 68) is sealed with sealing agent 72. The lower edge of the transparent glass substrate 12 is equipped with clip electrode 74, and electrically connected to transparent electrode film 65. The upper edge of transparent glass substrate 56 is equipped with clip electrode 76, and electrically connected to transparent electrode film 62. Mirror main part 78 of EC exterior mirror of Fig.13 replaces arrangement of electrolyte solution 68 with EC substance film 66 in Fig.12. Portions of the same designation as those used in Fig.1 are designated the same numerals and signs. Mirror main part 79 of EC exterior mirror of Fig.14 is composed of EC film 80 by EC solution. The EC film 80 is sealed by seal material 82. Portions of the same designation as those in Fig.15 to Fig.18 are designated the same numerals and signs.

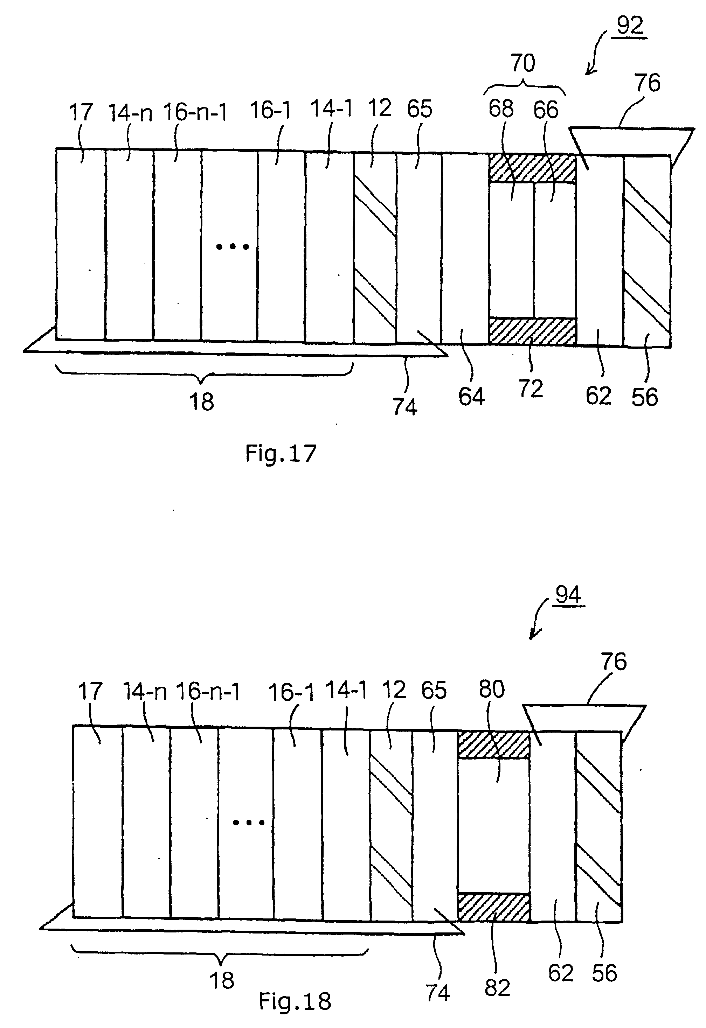

Embodiments of EC elements structured transparently in whole part by use of composite material of this invention are shown in Fig.15 to Fig.18, respectively. These EC elements can be used as modulated light windows such as a building and vehicles, etc. Portions of the same designation as those used in the respective embodiment are designated the same numerals and signs. In the structure of Fig.6, transparent electrode film 86 is arranged replacing electrode-cum-reflective film 32, and glass substrate 88 is structured with a transparent glass substrate. As for EC elements 90 of Fig.16, reflective film 58 and protection coat 59 are removed in a structure of Fig.12. As for EC elements 92 of Fig.17, the reflective film 58 and the protection coat 59 are removed in a structure of Fig.13. As for EC elements 94 of Fig.18, the reflective film 58 and the protection coat 59 are removed in a structure of Fig.14.

## Claims

1. A composite material having a laminated film in which between two or more photocatalyst layers each possessing a light permeability and a photocatalytic reactivity, middle layers composed of a light permeable material having a reflectance different from that of the photocatalyst layers are interposed, provided on the surface of a substrate.

2. The composite material as claimed in Claim 1, wherein the thickness of each photocatalyst film is from 5nm to 50nm.

3. The composite material as claimed in Claim 1 or Claim2, wherein the thickness of a single or multiple middle layers is from 5nm to 50nm.

4. The composite material as claimed in any one of Claims 1 to 3, wherein said photocatalyst film is composed of TiO₂, SrTiO₃, or WO₃.

5. The composite material as claimed in any one of Claims 1 to 3, wherein said middle layer is composed of an oxide.

6. The composite material as claimed in any one of Claims 1 to 5, wherein said middle layers are composed of either of SiO₂, WO₃, Al₂O₃, and ITO.

7. The composite material as claimed in any one of Claims 1 to 6, wherein said laminated film has a hydrophilic film having an optical permeability structured with different materials from the photocatalyst film of said uppermost layer provided on said photocatalyst film, and said hydrophilic film constitutes the outermost surface of the laminated film so as to be exposed to an open air.

8. The composite material as claimed in any one of Claims 1 to 6, wherein a photocatalyst film which constitutes an uppermost surface of said multiple layers constitutes the outermost surface of said laminated film so as to be exposed to an open air.

9. The composite material as claimed in any one of Claim 1 to Claim 8, wherein an outermost surface of said laminated film is formed in a state of porosity.

10. The composite material as claimed in any one of Claims 1 to 9, wherein said substrate comprises a transparent substrate.

11. The composite material as claimed in Claim 10, wherein a reflectance film is formed on a backside surface of said transparent film to make up a mirror.

12. The composite material as claimed in Claim 10, wherein a second substrate is arranged in an opposing manner, and a substance exhibiting electrochromic phenomenon is interposed therebetween to make up an EC element.

13. The composite material as claimed in Claim 12, wherein said second substrate is a transparent substrate, and a reflective film is formed on the external surface side of this second substrate to make up an EC mirror.

14. The composite material as claimed in Claim 12, wherein an electrode-cum-reflective film is formed in the inside of said second substrate to make up an EC mirror.

15. The composite material as claimed in Claim 11, 13, or 14, which is constituted as a mirror main part of the exterior mirror for a vehicle.

## Patentansprüche

1. Verbundmaterial mit einem auf der Oberfläche eines Substrats vorgesehenen laminierten Film, bei dem zwischen zwei oder mehr Photokatalysatorschichten, die jeweils eine Lichtdurchlässigkeit und eine photokatalytische Reaktivität aufweisen, Mittelschichten angeordnet sind, welche aus einem lichtdurchlässigen Material bestehen, dessen Reflexionsvermögen von demjenigen der Photokatalysatorschichten verschieden ist.

2. Verbundmaterial nach Anspruch 1, bei dem die Dicke jedes Photokatalysatorfilms zwischen 5 nm und 50 nm beträgt.

3. Verbundmaterial nach Anspruch 1 oder Anspruch 2, bei dem die Dicke einer einzelnen oder mehrerer Mittelschichten zwischen 5 nm und 50 nm beträgt.

4. Verbundmaterial nach einem der Ansprüche 1 bis 3, bei dem der Photokatalysatorfilm aus TiO₂, SrTiO₃ oder WO₃ besteht.

5. Verbundmaterial nach einem der Ansprüche 1 bis 3, bei dem die Mittelschicht aus einem Oxid besteht.

6. Verbundmaterial nach einem der Ansprüche 1 bis 5, bei dem die Mittelschichten aus SiO₂ oder WO₃ oder Al₂O₃ oder ITO bestehen.

7. Verbundmaterial nach einem der Ansprüche 1 bis 6, bei dem der laminierte Film einen hydrophilen Film mit einer optischen Durchlässigkeit aufweist, der aus Materialien gebildet ist, die von denjenigen des Photokatalysatorfilms der obersten Schicht verschieden sind, und auf dem Photokatalysatorfilm vorgesehen ist, und wobei der hydrophile Film die äußerste Fläche des laminierten Films bildet, so daß sie der freien Luft ausgesetzt ist.

8. Verbundmaterial nach einem der Ansprüche 1 bis 6, bei dem ein Photokatalysatorfilm, der die oberste Fläche der mehreren Schichten bildet, die äußerste Fläche des laminierten Films bildet, so daß er der freien Luft ausgesetzt ist.

9. Verbundmaterial nach einem der Ansprüche 1 bis 8, bei dem die äußerste Fläche des laminierten Films porös ausgebildet ist.

10. Verbundmaterial nach einem der Ansprüche 1 bis 9, bei dem das Substrat ein transparentes Substrat aufweist.

11. Verbundmaterial nach Anspruch 10, bei dem ein Reflexionsfilm auf der Rückseite des transparenten Films ausgebildet ist, um einen Spiegel zu bilden.

12. Verbundmaterial nach Anspruch 10, bei dem ein zweites Substrat gegenüberliegend angeordnet ist und eine ein elektrochemisches Phänomen aufweisende Substanz zwischen diesen vorgesehen ist, um ein elektrochromes Element zu bilden.

13. Verbundmaterial nach Anspruch 12, bei dem das zweite Substrat ein transparentes Substrat ist und ein reflektierender auf der Außenfläche des zweiten Substrats ausgebildet ist, um einen elektrochromen Spiegel zu bilden.

14. Verbundmaterial nach Anspruch 12, bei dem ein reflektierender Elektrodenfilm im Inneren des zweiten Substrats zur Bildung eines elektrochromen Spiegels gebildet ist.

15. Verbundmaterial nach Anspruch 11, 13 oder 14, das als Hauptspiegelteil eines Fahrzeugaußenspiegels ausgebildet ist.

## Revendications

1. Matériau composite comportant un film stratifié dans lequel deux ou plusieurs couches photocatalytiques, présentant une perméabilité à la lumière et une réactivité photocatalytique, comportent entre elles des couches intermédiaires constituées d'un matériau perméable à la lumière dont le pouvoir réfléchissant est différent de celui des couches photocatalytiques, l'ensemble étant placé sur la surface d'un substrat.

2. Matériau composite selon la revendication 1, dans lequel l'épaisseur de chaque film photocatalytique est comprise entre 5 nm et 50 nm.

3. Matériau composite selon la revendication 1 ou la revendication 2, dans lequel l'épaisseur d'une couche intermédiaire unique ou de plusieurs couches intermédiaires est comprise entre 5 nm et 50 nm.

4. Matériau composite selon l'une quelconque des revendications 1 à 3, dans lequel ledit film photocatalytique est constitué de TiO₂, SrTiO₂, ou de WO₃.

5. Matériau composite selon l'une quelconque des revendications 1 à 3, dans lequel ladite couche intermédiaire est constitué d'un oxyde.

6. Matériau composite selon l'une quelconque des revendications 1 à 5, dans lequel lesdites couches intermédiaires sont constituées de l'un des composés SiO₂, WO₃, Al₂O₃, ou ITO.

7. Matériau composite selon l'une quelconque des revendications 1 à 6, dans lequel ledit film stratifié comporte un film hydrophile présentant une perméabilité optique structurée avec des matériaux différents de ceux du film photocatalytique de ladite couche supérieure placée sur ledit film photocatalytique, et ledit film hydrophile constitue la surface extérieure du film stratifié de manière être exposé à l'air libre.

8. Matériau composite selon l'une quelconque des revendications 1 à 6, dans lequel un film photocatalytique, qui constitue une surface supérieure desdites plusieurs couches, constitue la surface extérieure dudit film stratifié de manière être exposé à l'air libre.

9. Matériau composite selon l'une quelconque des revendications 1 à 8, dans lequel une surface extérieure dudit film stratifié est formée dans un état de porosité.

10. Matériau composite selon l'une quelconque des revendications 1 à 9, dans lequel ledit substrat comprend un substrat transparent.

11. Matériau composite selon la revendication 10, dans lequel un film réfléchissant est formé sur une surface arrière dudit film transparent pour réaliser un miroir.

12. Matériau composite selon la revendication 10, dans lequel un deuxième substrat est placé à l'opposé, et une substance présentant un phénomène électrochromique est interposée entre lesdits substrats de manière à obtenir un élément EC.

13. Matériau composite selon la revendication 12, dans lequel ledit deuxième substrat est un substrat transparent, et un film réfléchissant est formé du côté de la surface extérieure de ce deuxième substrat pour réaliser un miroir EC.

14. Matériau composite selon la revendication 12, dans lequel un film réfléchissant servant d'électrode est formé à l'intérieur dudit deuxième substrat pour réaliser un miroir EC.

15. Matériau composite selon la revendication 11, 13 ou 14, qui est constitué comme la partie principale d'un miroir du rétroviseur extérieur d'un véhicule.
